# EUROPEAN PATENT SPECIFICATION

(11) **EP 3 919 894 B1**
(45) Date of publication and mention of the grant of the patent: **18.10.2023**
(21) Application number: 20178296.8
(22) Date of filing: 04.06.2020
(51) Int. Cl.: G01N 21/88, G03B 3/10, G03B 15/00

(54) **OPTICAL INSPECTION SYSTEM**
OPTISCHE INSPEKTIONSVORRICHTUNG
DISPOSITIF DE CONTRÔLE OPTIQUE

(43) Date of publication of application: 08.12.2021
(73) Proprietor: He Tong Technology Co., Ltd., Tainan City (TW); Wen Chin Technology Co., Ltd., Kaohsiung City (TW)
(72) Inventor: LEE, Yi-Ning, Tainan City (TW); CHEN, Ying-Nan, Kaohsiung City (TW)
(74) Representative: Casalonga

(56) References cited:
- CN-U- 207 046 333
- US-A1- 2009 251 815
- N.N.: "computar H10Z1218PDC specifications", , 21 August 2000 (2000-08-21), XP055751214, Retrieved from the Internet: URL:https://www.vision-dimension.com/media /pdf/b8/98/9b/H10Z1218PDC_Datasheet.pdf [retrieved on 2020-11-17]

## Description

### 1. Field of the Invention

The present invention relates to an imaging inspection device, and more particularly to an imaging inspection device that is able to improve accuracy of examinations.

### 2. Description of Related Art

Image inspection is a modem measuring method extensively applied in various technical fields. When image inspection is processed by a conventional imaging inspection device, a product under inspection is conveyed by a conveyor to pass between a light emitting element and an image capture unit. The light emitting element emits light on the product under inspection. The image capture unit captures images of the product under inspection by an image sensor such as the charged-coupled device (CCD). The image sensor converts outline of the product under inspection into digital information and transmits the digital information to a computer. The digital information is analyzed and compared to reference data by the computer. Then the computer determines whether the digital information of the product under inspection meets requirement and shows results on a monitor of the computer. The computer transmits the results to a discharging unit to discharge the product under inspection that is defective. Speed of the image inspection is fast and the results of the image inspection are reliable. Therefore, the image inspection is extensively applied in various technical fields. US 2009/251815 A1 discloses an imaging inspection device comprising a platform having a base, a driving unit mounted to the base, a carrier mounted to the driving unit and driven by the driving unit to rotate, and a feeding section, an inspection section, and a distributing section being above the carrier and arranged circularly and sequentially. The inspection device comprises further multiple image capture units disposed around the carrier adjacent to the inspection section, each one of the image capture units having an assembling mount and a lens mounted to the assembling mount, electrically connected to a controlling unit for transmitting digital information of images captured by the lens to the controlling unit. The inspection device comprises further a discharging unit configured to move products under inspection away from the carrier, disposed adjacent to the distributing section and electrically connected to the controlling unit.

As the products under inspection include a variety of types, the products under inspection have distinct sizes and outlines. Staff has to change positions of the image capture unit manually for focusing. However, the single image capture unit can get limited digital information. Position of the image capture unit would not be accurate due to manual adjustment. Inaccurate position of the image capture unit can cause the computer to output erroneous results. Manually adjusting positions of the image capture unit makes the image inspection restricted by scene of inspection. To overcome the shortcomings of the conventional imaging inspection device, the present invention provides an imaging inspection device to mitigate or obviate the aforementioned problems.

The invention is an imaging inspection device as defined in claim 1. Accordingly, said imaging inspection device comprises a platform having a base, a driving unit mounted to the base, a carrier mounted to the driving unit and driven by the driving unit to rotate, and a feeding section, an inspection section, and a distributing section being designated areas defined above the carrier and arranged circularly and sequentially. The imaging inspection device of the invention comprises further a controlling unit electrically connected to the driving unit for controlling the driving unit to drive the carrier, multiple image capture units disposed around the carrier, disposed adjacent to the inspection section. Each one of the image capture units has an assembling mount, a focusing assembly mounted to the assembling mount and electrically connected to the controlling unit, and a zoom lens mounted to the assembling mount, connected to and driven by the focusing assembly for focusing and electrically connected to the controlling unit for transmitting digital information of images captured by the zoom lens to the controlling unit. The imaging inspection device of the invention comprises further a discharging unit configured to move products under inspection away from the carrier , disposed adjacent to the distributing section and electrically connected to the controlling unit. In the imaging inspection device of the invention the carrier is made of transparent materials, each one of the image capture units has a supplementary lighting element mounted to the assembling mount and disposed in front of the zoom lens of the image capture unit to emit light toward the zoom lens, and the inspection section is disposed between the supplementary lighting element and the zoom lens of each one of the image capture units. Furthermore, in the imaging inspection device of the invention the focusing assembly of each one of the image capture units has a driving motor mounted to the assembling mount of the image capture unit, a driving gear mounted to the driving motor of the image capture unit and driven by the driving motor, and a driven gear mounted to the zoom lens of the image capture unit, engaged with the driving gear and driven by the driving motor to rotate for focusing.

Other objects, advantages, and novel features of the invention will become more apparent from the following detailed description when taken in conjunction with the accompanying drawings.

### In the drawings:

Fig. 1 is a perspective view of an imaging inspection device in accordance with the present invention;
Fig. 2 is a partial top view of the imaging inspection device in Fig. 1;
Fig. 3 is a side view of a lateral image capture unit of the imaging inspection device in Fig. 1;
Fig. 4 is a side view of a bottom image capture unit of the imaging inspection device in Fig. 1;
Fig. 5 is a side view of a swingable image capture unit of the imaging inspection device in Fig. 1;
Fig. 6 is a side view of a top image capture unit of the imaging inspection device in Fig. 1;
Fig. 7 is a perspective view of an image capture unit of the imaging inspection device in Fig. 1;
Fig. 8 is an operational side view of the lateral image capture unit of the imaging inspection device in Fig. 1;
Fig. 9 is an operational side view of the bottom image capture unit of the imaging inspection device in Fig. 1;
Fig. 10 is an operational side view of the swingable image capture unit of the imaging inspection device in Fig. 1; and
Fig. 11 is an operational side view of the top image capture unit of the imaging inspection device in Fig. 1.

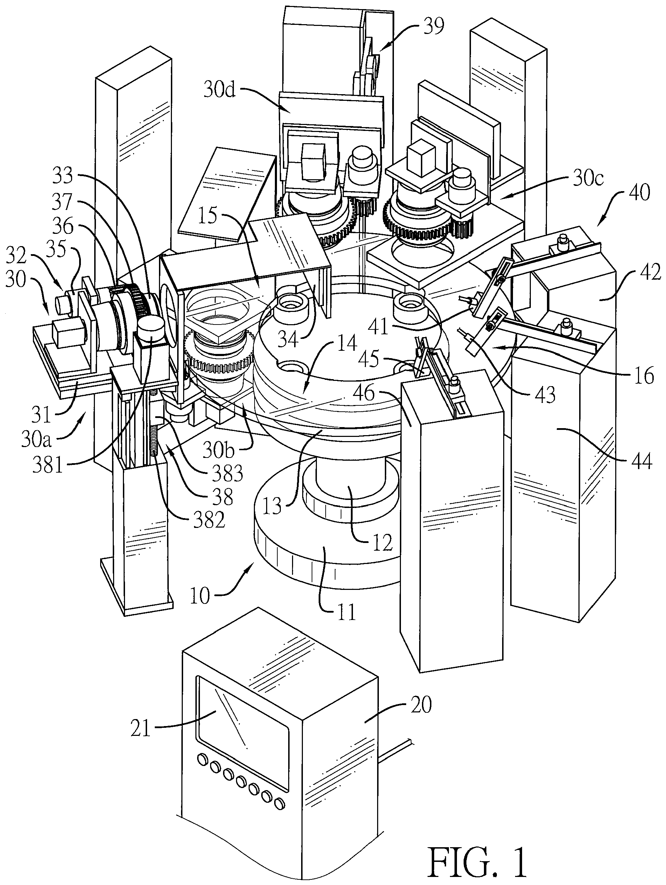

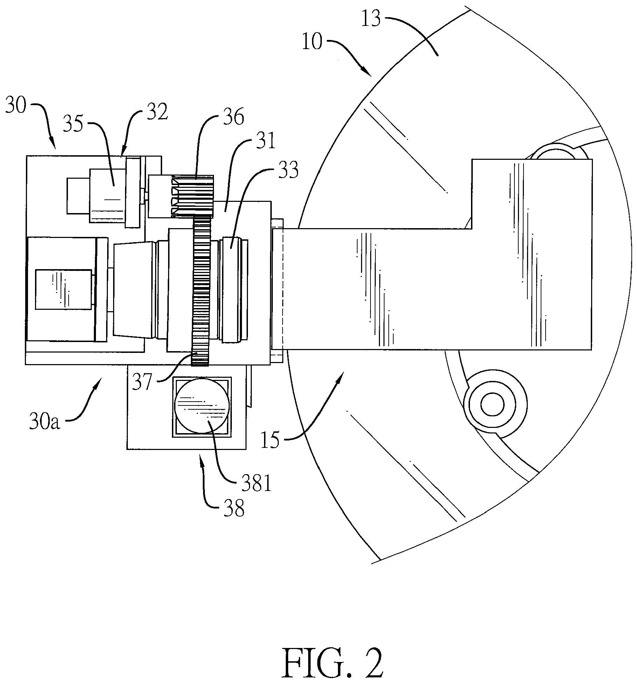

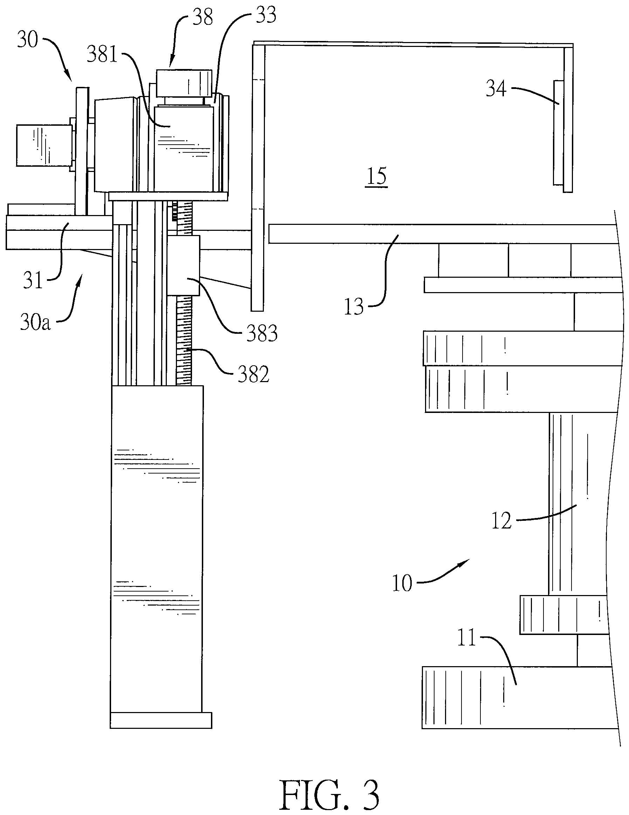

With reference to Figs. 1 to 3, an imaging inspection device in accordance with the present invention has a platform 10, a controlling unit 20, multiple image capture units 30, and a discharging unit 40.

With reference to Figs. 1 to 3, the platform 10 has a base 11, a driving unit 12, a carrier 13, a feeding section 14, an inspection section 15, and a distributing section 16. The driving unit 12 is mounted to the base 11. The carrier 13 for carrying products under inspection is mounted to the driving unit 12 and is driven by the driving unit 12 to rotate. The carrier 13 is made of transparent materials such as glass or transparent acrylics. The feeding section 14, the inspection section 15, and the distributing section 16 are disposed above the carrier 13 and are arranged circularly and sequentially.

With reference to Fig. 1, the controlling unit 20 is disposed adjacent to the platform 10 and is electrically connected to the driving unit 12 for controlling the driving unit 12 to drive the carrier 13 to rotate. The controlling unit 20 has a display 21 for showing digital information.

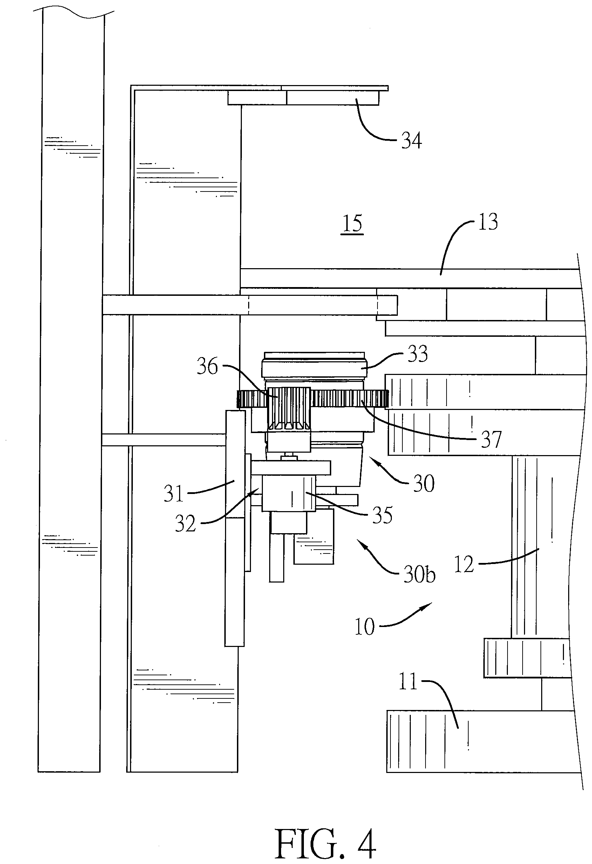

With reference to Figs. 1, 2, and 4, the image capture units 30 are disposed around the carrier 13, are disposed adjacent to the inspection section 15, and are electrically connected to the controlling unit 20. The image capture units 30 are disposed adjacent to the carrier 13 and each one of the image capture units 30 has an assembling mount 31, a focusing assembly 32, a zoom lens 33, and a supplementary lighting element 34. The focusing assembly 32 is mounted to the assembling mount 31 and is electrically connected to the controlling unit 20. The zoom lens 33 is connected to the focusing assembly 32 and is driven by the focusing assembly 32 for focusing. The zoom lens 33 is electrically connected to the controlling unit 20 as well for transmitting digital information of images captured by the zoom lens 33. The supplementary lighting element 34 is mounted to the assembling mount 31 and is disposed in front of the zoom lens 33 to emit light into the zoom lens 33. The inspection section 15 of the platform 10 is disposed between the supplementary lighting element 34 and the zoom lens 33 of each one of the image capture units 30.

The focusing assembly 32 of each one of the image capture units 30 has a driving motor 35, a driving gear 36, and a driven gear 37. The driving motor 35 is mounted to the assembling mount 31 of the image capture unit 30. The driving gear 36 is mounted to the driving motor 35 of the image capture unit 30 and is driven by the driving motor 35. The driven gear 37 is mounted to the zoom lens 33 of the image capture unit 30, is engaged with the driving gear 36, and is capable of being driven by the driving motor 35 to rotate for focusing.

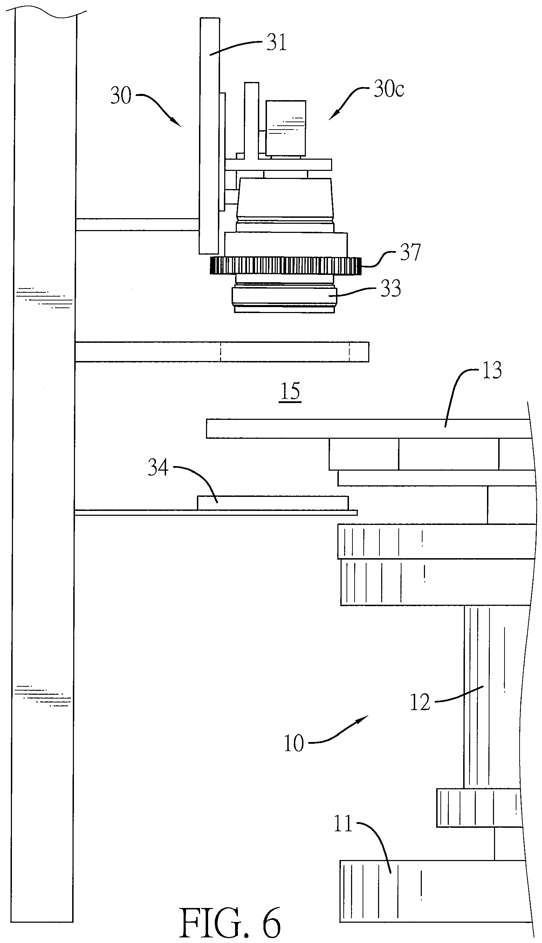

In the embodiment of the present invention, with reference to Figs. 1, 4, and 6, the multiple image capture units 30 are further defined as a lateral image capture unit 30a, a bottom image capture unit 30b, a top image capture unit 30c, and a swingable image capture unit 30d. The lateral image capture unit 30a has an optical axis radially extending through a rotating axis of the carrier 13. The bottom image capture unit 30b is disposed below the carrier 13 and has an optical axis bottom-up extending through two flat faces of the carrier 13. The top image capture unit 30c is disposed above the carrier 13 and has an optical axis top-down extending through the two flat faces of the carrier 13. The swingable image capture unit 30d is disposed above the carrier 13 and has an optical axis. The swingable image capture unit 30d is capable of swinging to adjust an angle defined between the rotating axis of the carrier 13 and the optical axis of the swingable image capture unit 30d.

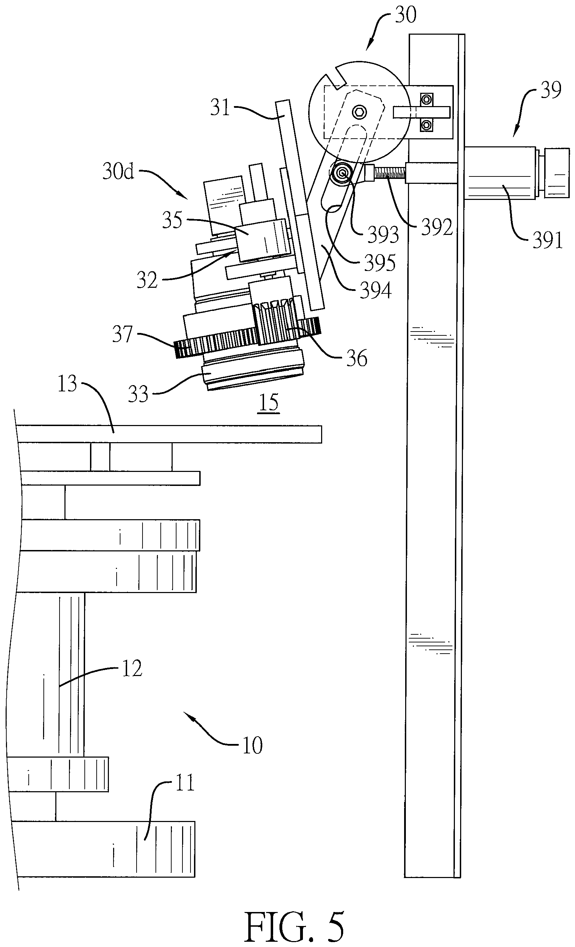

With reference to Figs. 1, 3, and 5, the lateral image capture unit 30a has an elevating unit 38 having a rotating motor 381, a screw shaft 382, and a nut 383. The rotating motor 381 is electrically connected to the controlling unit 20. The screw shaft 382 is connected to the rotating motor 381 and is driven by the rotating motor 381 for rotating. The nut 383 is connected to the assembling mount 31 of the lateral image capture unit 30a, is screwed with the screw shaft 382, and is capable of moving up and down along the screw shaft 382.

The swingable image capture unit 30d has a swinging unit 39 having a retracting motor 391, a retracting shaft 392, a slider 393, and a swinging arm 394. The retracting motor 391 is electrically connected to the controlling unit 20. The swinging arm 394 is capable of swinging, is connected to the assembling mount 31 of the swingable image capture unit 30d, and has an elongated groove 395. The retracting shaft 392 is connected to the retracting motor 391 and is driven by the retracting motor 391 for approaching the carrier 13 or moving away from the carrier 13. The slider 393 is connected to a terminal end of the retracting shaft 392 and extends in the elongated groove 395 to connect the retracting shaft 392 and the swinging arm 394. The slider 393 is able to move together with the retracting shaft 392 to push the swinging arm 394 for swinging toward or away from the carrier 13. In the embodiment of the present invention, the retracting motor 391 has a rotating sleeve capable of rotating, and the retracting shaft 392 is a screw bar. The rotating sleeve of the retracting motor 391 is screwed with the retracting shaft 392 and drives the retracting shaft 392 to rotate and to approach or move away from the carrier 13.

With reference to Fig. 1, the discharging unit 40 is configured to move the products under inspection away from the carrier 13. The discharging unit 40 is disposed adjacent to the distributing section 16 and is electrically connected to the controlling unit 20. The discharging unit 40 has a qualified-product discharging component 41, a qualified-product box 42, a defective-product discharging component 43, and a defective-product box 44. The qualified-product box 42 and the defective-product box 44 are disposed adjacent to the carrier 13. The qualified-product discharging component 41 and the defective-product discharging component 43 are disposed adjacent to the carrier 13 and are electrically connected to the controlling unit 20. The qualified-product discharging component 41 is configured to pneumatically discharge qualified products from the carrier 13 into the qualified-product box 42. The defective-product discharging component 43 is configured to pneumatically discharge defective products from the carrier 13 into the defective-product box 44.

The discharging unit 40 further has a re-examination discharging component 45 and a re-examination box 46. The re-examination discharging component 45 is disposed adjacent to the carrier 13 and is electrically connected to the controlling unit 20. The re-examination box 46 is disposed adjacent to the carrier 13. The re-examination discharging component 45 is configured to pneumatically discharge the products under inspection from the carrier 13 into the re-examination box 46.

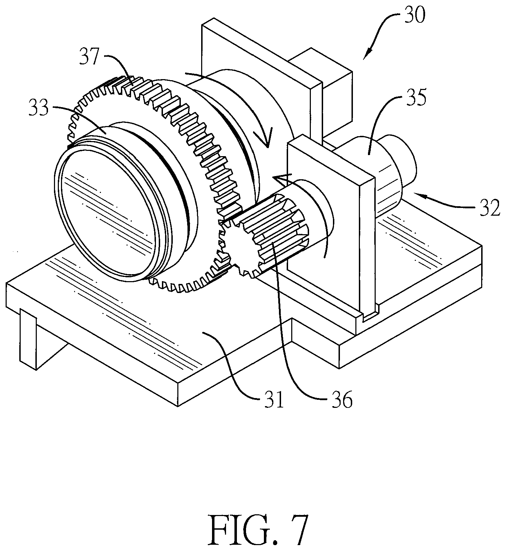

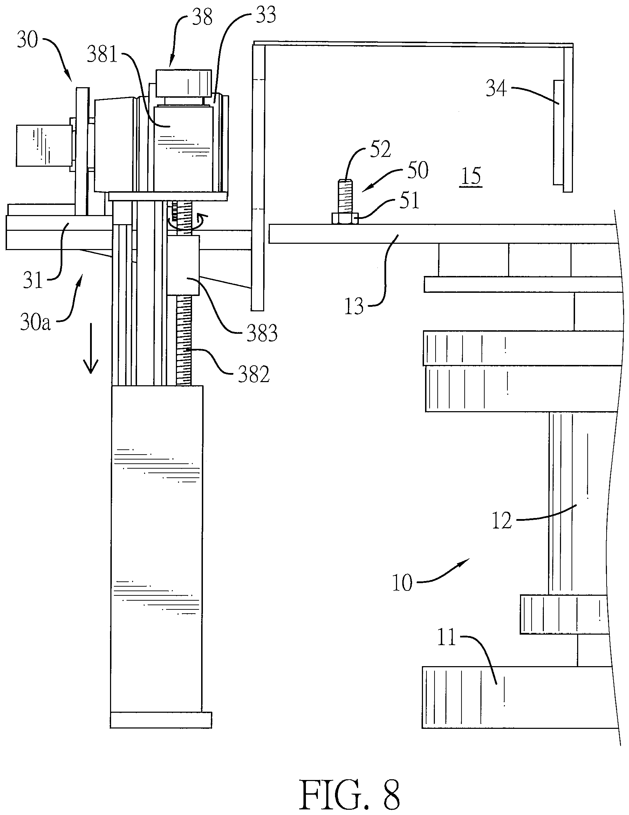

For example, a hex bolt 50 is taken as a product under inspection. With reference to Figs. 1, 2, 7, and 8, when the hex bolt 50 is placed in front of the zoom lens 33 of one of the image capture units 30, the driving motor 35 drives the driving gear 36, and the driving gear 36 drives the driven gear 37 to let the zoom lens 33 focus and capture clear images of the hex bolt 50. The driving gear 36 rotates for focusing and has a rotated number of teeth. The rotated number of teeth is recorded in the controlling unit 20. When the image capture unit 30 captures images of another hex bolt 50, the controlling unit 20 controls the focusing assembly 32 of the image capture unit 30 according to the rotated number of teeth recorded in the controlling unit 20. Consequently, the zoom lens 33 can focus without manually operating, can reduce personal error, and can avoid misjudgments of inspection. Furthermore, the assembling mount 31 of the image capture unit 30 is free from altering positions as the zoom lens 33 is focusing. Therefore, the zoom lens 33 of each one of the image capture units 30 is capable of focusing without being restricted by scene of inspection.

When the imaging inspection device in accordance with the present invention inspects different kinds of products rather than a hex bolt, the zoom lens 33 of each one of the image capture units 30 has to refocus. The rotated number of teeth of the driving gear 36 is recorded in the controlling unit 20 again to minimize personal errors, avoid misjudgments, and improve accuracy of focus.

With reference to Figs. 1, 8, and 10, the height of the zoom lens 33 of the lateral capture unit 30a can be adjusted by the elevating unit 38. The controlling unit 20 controls the rotating motor 381 to drive the screw shaft 382 to let the nut 383 move up and down to adjust the height of the zoom lens 33 of the lateral capture unit 30a. The swinging unit 39 of the swingable image capture 30d can be controlled by the controlling unit 20. The retracting motor 391 drives the retracting shaft 392 to approach or to move away from the carrier 13. The slider 393 connected to the retracting shaft 392 can move along the elongated groove 395 of the swinging arm 394 to push the swinging arm 394 for swinging toward or away from the carrier 13. Shooting angle of the zoom lens 33 of the swingable image capture unit 30d is adjusted accordingly.

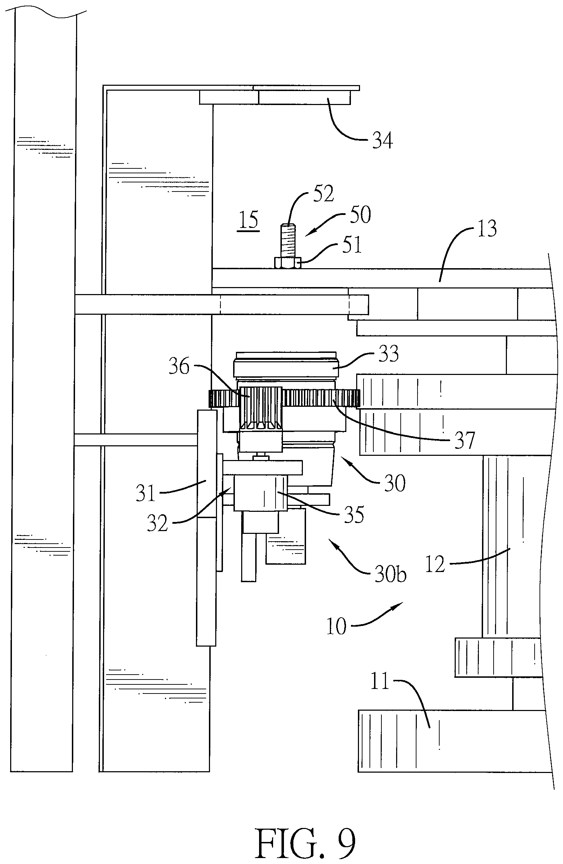

With reference to Figs. 1, 8, and 9, the hex bolt 50 can be transported to the feeding section 14 via a conveyor. The hex bolt 50 has a bolt head 51 and a stud 52 formed on the bolt head 51. The bolt head 51 is placed on the carrier 13 and the stud 52 is disposed above the bolt head 51. The controlling unit 20 controls the driving unit 12 to drive the carrier 13 for rotating. The carrier 13 carries the hex bolt 50 into the inspection section 15, and the hex bolt 50 passes the zoom lenses 33 of the image capture units 30 one by one. When the hex bolt 50 arrives at the lateral image capture unit 30a, the supplementary lighting element 34 of the lateral image capture unit 30a emits light to a lateral face of the hex bolt 50. The zoom lens 33 of the lateral image capture unit 30a captures lateral images of the hex bolt 50 and transmits digital information of the lateral images to the controlling unit 20. Next, the hex bolt 50 arrives at the bottom image capture unit 30b. The supplementary lighting element 34 of the bottom image capture unit 30b emits light to the hex bolt 50 from top to down. Therefore, the zoom lens 33 of the bottom image capture unit 30b clearly captures images of the bolt head 51 of the hex bolt 50 and transmits the images to the controlling unit 20.

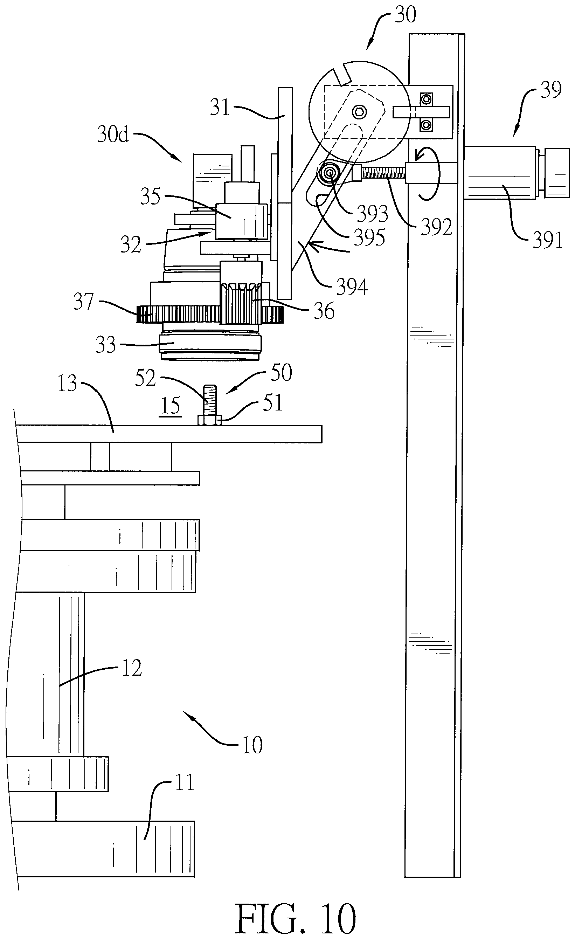

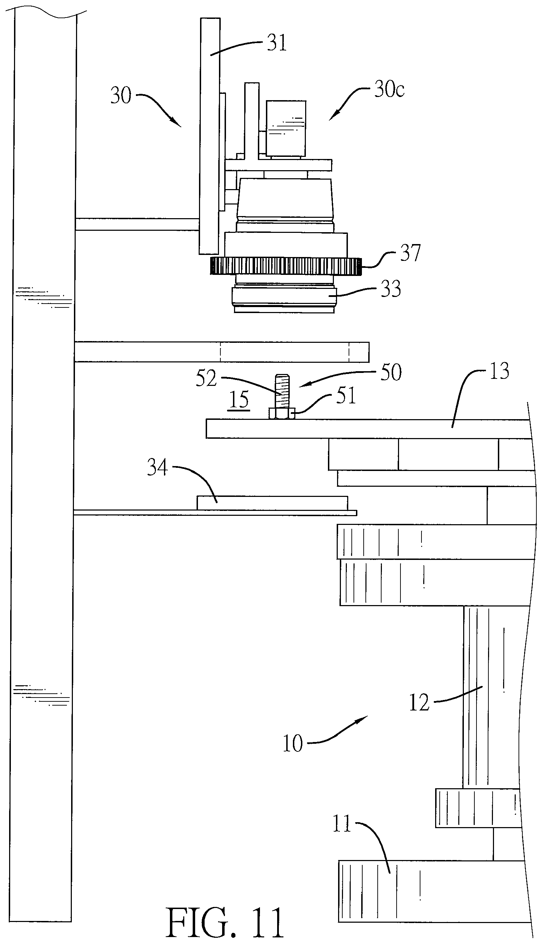

With reference to Figs. 10 and 11, the carrier 13 carries the hex bolt 50 to the swingable image capture unit 30d. The shooting angle of the zoom lens 33 of the swingable image capture unit 30d can be adjusted via the swinging unit 39. Therefore, the zoom lens 33 of the swingable image capture unit 30d can capture a joint portion of the bolt head 51 and the stud 52 of the hex bolt 50. Then, the carrier 13 carries the hex bolt 50 to the top image capture unit 30c. The supplementary lighting element 34 of the top image capture unit 30c emits light bottom-up. The zoom lens 33 of the top image capture unit 30c captures images of the bolt head 51 and transmits the images to the controlling unit 20. The controlling unit 20 distinguishes whether the hex bolt 50 is qualified according to the images transmitted by the image capture units 30.

With reference to Fig. 1, the hex bolt 50 arrives at the distributing section 16. Judgement of the controlling unit 20 is transmitted to the discharging unit 40. The qualified-product discharging component 41 blows qualified hex bolts into the qualified-product box 42. The defective-product discharging component 43 blows defective hex bolts into the defective-product box 44. In the embodiment of the present invention, if the controlling unit 20 fails to distinguish the hex bolt 50, the re-examination discharging component 45 blows the hex bolt 50 into the re-examination box 46, and the qualified-product discharging component 41 and the defective-product discharging component 43 do not operate.

In addition, the carrier 13 is made of glass, transparent acrylics, or other transparent materials, and the bottom image capture unit 30b can capture images of a bottom of the product under inspection. The supplementary lighting element 34 of each one of the multiple image capture units 30 can make the image capture units capture clear images. The display 21 of the controlling unit 20 is designed for staff monitoring inspection procedure readily. The staff can proceed troubleshooting immediately.

In conclusion, the focusing assembly 32 is controlled by the controlling unit 20, so focus of the zoom lens 33 of each one of the image capture units 30 is more accurate than manual focus. The images captured by the image capture units 30 are clear and can avoid misjudgments of the controlling unit 20. The assembling mount 31 of each one of the image capture units 30 is free from altering positions as the zoom lens 33 is focusing. Therefore, the zoom lens 33 of each one of the image capture units 30 is capable of focusing without being restricted by scene of inspection.

## Claims

1. An imaging inspection device comprising:
- a platform (10) having a base (11);
a driving unit (12) mounted to the base (11);
a carrier (13) mounted to the driving unit (12) and driven by the driving unit (12) to rotate;
a nd a feeding section (14), an inspection section (15), and a distributing section (16) being designated areas defined above the carrier (13) and arranged circularly and sequentially;
- a controlling unit (20) electrically connected to the driving unit (12) for controlling the driving unit (12) to drive the carrier (13);
- multiple image capture units (30) disposed around the carrier (13), disposed adjacent to the inspection section (15), and each one of the image capture units (30) having
an assembling mount (31);
a focusing assembly (32) mounted to the assembling mount (31) and electrically connected to the controlling unit (20); and
a zoom lens (33) mounted to the assembling mount (31), connected to and driven by the focusing assembly (32) for focusing and electrically connected to the controlling unit (20) for transmitting digital information of images captured by the zoom lens (33) to the controlling unit (20); and
- a discharging unit (40) configured to move products under inspection away from the carrier (13), disposed adjacent to the distributing section (16) and electrically connected to the controlling unit (20),
wherein
- the carrier (13) is made of transparent materials;
- each one of the image capture units (30) has a supplementary lighting element (34) mounted to the assembling mount (31) and disposed in front of the zoom lens (33) of the image capture unit (30) to emit light toward the zoom lens (33); and
- the inspection section (15) is disposed between the supplementary lighting element (34) and the zoom lens (33) of each one of the image capture units (30),
wherein
- the focusing assembly (32) of each one of the image capture units (30) has
a driving motor (35) mounted to the assembling mount (31) of the image capture unit (30);
a driving gear (36) mounted to the driving motor (35) of the image capture unit (30) and driven by the driving motor (35); and
a driven gear (37) mounted to the zoom lens (33) of the image capture unit (30), engaged with the driving gear (36), and driven by the driving motor (35) to rotate for focusing.

2. The imaging inspection device as claimed in claim 1, wherein the multiple image capture units (30) include:
a lateral image capture unit (30a) having an optical axis radially extending through a rotating axis of the carrier (13);
a bottom image capture unit (30b) disposed below the carrier (13) and having an optical axis bottom-up extending through two flat faces of the carrier (13);
a top image capture unit (30c) disposed above the carrier (13) and having an optical axis top-down extending through the two flat faces of the carrier (13); and
a swingable image capture unit (30d) having an optical axis, and the swingable image capture unit (30d) disposed above the carrier (13) and capable of swinging to adjust an angle defined between the rotating axis of the carrier (13) and the optical axis of the swingable image capture unit (30d).

3. The imaging inspection device as claimed in claim 2, wherein
the lateral image capture unit (30a) has an elevating unit (38) having
a rotating motor (381) electrically connected to the controlling unit (20);
a screw shaft (382) connected to the rotating motor (381) and driven by the rotating motor (381) for rotating; and
a nut (383) screwed with the screw shaft (382), capable of moving up and down along the screw shaft (382), and connected to the assembling mount (31) of the lateral image capture unit (30a).

4. The imaging inspection device as claimed in claim 2, wherein
the swingable image capture unit (30d) has a swinging unit (39) having
a retracting motor (391) electrically connected to the controlling unit (20);
a swinging arm (394) having an elongated groove (395), capable of swinging, and connected to the assembling mount (31) of the swingable image capture unit (30d);
a retracting shaft (392) connected to the retracting motor (391) and driven by the retracting motor (391) for extending toward the carrier (13) or away from the carrier (13);
a slider (393) connected to a terminal end of the retracting shaft (392), protruding in the elongated groove (395), and moving together with the retracting shaft (392) to push the swinging arm (394) for swinging toward or away from the carrier (13).

5. The imaging inspection device as claimed in any one of claims 1 to 4, wherein the controlling unit (20) has a display for showing the digital information of the images captured by the zoom lens (33) of each one of the image capture units (30).

6. The imaging inspection device as claimed in any one of claims 1 to 5, wherein
the discharging unit (40) has
a qualified-product box (42) disposed adjacent to the carrier (13);
a qualified-product discharging component (41) disposed adjacent to the carrier (13), electrically connected to the controlling unit (20), and configured to discharge qualified products from the carrier (13) into the qualified-product box (42);
a defective-product box (44) disposed adjacent to the carrier (13); and
a defective-product discharging component (43) disposed adjacent to the carrier (13), electrically connected to the controlling unit (20), and configured to discharge defective products from the carrier (13) into the defective-product box (44).

7. The imaging inspection device as claimed in claim 6, wherein
the qualified-product discharging component (41) pneumatically blows the qualified products; and
the defective-product discharging component (43) pneumatically blows the defective products.

## Patentansprüche

1. Bildgebungsinspektionsvorrichtung, umfassend:
- eine Plattform (10), die eine Basis (11) aufweist;
eine Antriebseinheit (12), die auf der Basis (11) montiert ist;
einen Träger (13), der an der Antriebseinheit (12) montiert ist und von der Antriebseinheit (12) angetrieben wird, um sich zu drehen;
und einen Zuführabschnitt (14), einen Inspektionsabschnitt (15) und einen Verteilerabschnitt (16), die bezeichnete Bereiche sind, die über dem Träger (13) definiert und kreisförmig und sequentiell angeordnet sind;
- eine Steuereinheit (20), die mit der Antriebseinheit (12) elektrisch verbunden ist, um die Antriebseinheit (12) zu steuern, um den Träger (13) anzutreiben;
- mehrere Bildaufnahmeeinheiten (30), die um den Träger (13) herum angeordnet sind, die angrenzend an den Inspektionsabschnitt (15) angeordnet sind, und wobei jede der Bildaufnahmeeinheiten (30) aufweist:
eine Aufbauhalterung (31);
eine Fokussierbaugruppe (32), die an der Aufbauhalterung (31) montiert ist und mit der Steuereinheit (20) elektrisch verbunden ist; und
ein Zoomobjektiv (33), das an der Aufbauhalterung (31) montiert ist, das zum Fokussieren mit der Fokussierbaugruppe (32) verbunden ist und von dieser angetrieben wird, und mit der Steuereinheit (20) elektrisch verbunden ist, um digitale Informationen von Bildern, die von dem Zoomobjektiv (33) aufgenommen werden, an die Steuereinheit (20) zu übertragen; und
- eine Abladeeinheit (40), die dazu konfiguriert ist, inspizierte Produkte von dem Träger (13) zu entfernen, die angrenzend an den Verteilerabschnitt (16) angeordnet ist und mit der Steuereinheit (20) elektrisch verbunden ist,
wobei
- der Träger (13) aus durchsichtigen Materialien hergestellt ist;
- jede der Bildaufnahmeeinheiten (30) ein zusätzliches Beleuchtungselement (34) aufweist, das an der Aufbauhalterung (31) montiert ist und vor dem Zoomobjektiv (33) der Bildaufnahmeeinheit (30) angeordnet ist, um Licht in Richtung auf das Zoomobjektiv (33) zu emittieren; und
- der Inspektionsabschnitt (15) zwischen dem zusätzlichen Beleuchtungselement (34) und dem Zoomobjektiv (33) jeder der Bildaufnahmeeinheiten (30) angeordnet ist,
wobei
- die Fokussierbaugruppe (32) jeder der Bildaufnahmeeinheiten (30) aufweist:
einen Antriebsmotor (35), der an der Aufbauhalterung (31) der Bildaufnahmeeinheit (30) montiert ist;
ein Antriebszahnrad (36), das an dem Antriebsmotor (35) der Bildaufnahmeeinheit (30) montiert ist und von dem Antriebsmotor (35) angetrieben wird; und
ein angetriebenes Zahnrad (37), das an dem Zoomobjektiv (33) der Bildaufnahmeeinheit (30) montiert ist, das mit dem Antriebszahnrad (36) in Eingriff steht und von dem Antriebsmotor (35) angetrieben wird, um sich zum Fokussieren zu drehen.

2. Bildgebungsinspektionsvorrichtung nach Anspruch 1, wobei die mehreren Bildaufnahmeeinheiten (30) umfassen:
eine seitliche Bildaufnahmeeinheit (30a), die eine optische Achse aufweist, die sich radial durch eine Drehachse des Trägers (13) hindurch erstreckt;
eine untere Bildaufnahmeeinheit (30b), die unter dem Träger (13) angeordnet ist und eine optische Achse aufweist, die sich von unten nach oben durch zwei flache Seiten des Trägers (13) hindurch erstreckt;
eine obere Bildaufnahmeeinheit (30c), die über dem Träger (13) angeordnet ist und eine optische Achse aufweist, die sich von oben nach unten durch die beiden flachen Seiten des Trägers (13) hindurch erstreckt; und
eine schwenkbare Bildaufnahmeeinheit (30d), die eine optische Achse aufweist, und wobei die schwenkbare Bildaufnahmeeinheit (30d) über dem Träger (13) angeordnet ist und schwenken kann, um einen Winkel anzupassen, der zwischen der Drehachse des Trägers (13) und der optischen Achse der schwenkbaren Bildaufnahmeeinheit (30d) definiert ist.

3. Bildgebungsinspektionsvorrichtung nach Anspruch 2, wobei die seitliche Bildaufnahmeeinheit (30a) eine Hebeeinheit (38) aufweist, die aufweist:
einen Drehmotor (381), der mit der Steuereinheit (20) elektrisch verbunden ist;
eine Gewindespindel (382), die mit dem Drehmotor (381) verbunden ist und von dem Drehmotor (381) zum Drehen angetrieben wird; und
eine Mutter (383), die auf die Gewindespindel (382) geschraubt ist, die sich an der Gewindespindel (382) entlang auf und ab bewegen kann und mit der Aufbauhalterung (31) der seitlichen Bildaufnahmeeinheit (30a) verbunden ist.

4. Bildgebungsinspektionsvorrichtung nach Anspruch 2, wobei
die schwenkbare Bildaufnahmeeinheit (30d) eine Schwenkeinheit (39) aufweist, die aufweist:
einen Einfahrmotor (391), der mit der Steuereinheit (20) elektrisch verbunden ist;
einen Schwenkarm (394), der eine längliche Nut (395) aufweist, der schwenken kann und mit der Aufbauhalterung (31) der schwenkbaren Bildaufnahmeeinheit (30d) verbunden ist;
eine Einfahrspindel (392), die mit dem Einfahrmotor (391) verbunden ist und von dem Einfahrmotor (391) angetrieben wird, um zu dem Träger (13) oder von dem Träger (13) zu erstrecken;
ein Gleitstück (393), das mit einem Abschlussende der Einfahrspindel (392) verbunden ist, das in die längliche Nut (395) vorsteht und sich zusammen mit der Einfahrspindel (392) bewegt, um auf den Schwenkarm (394) zum Schwenken zu oder von dem Träger (13) zu drücken.

5. Bildgebungsinspektionsvorrichtung nach einem der Ansprüche 1 bis 4, wobei die Steuereinheit (20) eine Anzeige zum Zeigen der digitalen Informationen der Bilder, die von dem Zoomobjektiv (33) jeder der Bildaufnahmeeinheiten (30) aufgenommen werden, aufweist.

6. Bildgebungsinspektionsvorrichtung nach einem der Ansprüche 1 bis 5, wobei die Abladeeinheit (40) aufweist:
einen Behälter (42) für geeignete Produkte, der angrenzend an den Träger (13) angeordnet ist;
eine Komponente zum Abladen von geeigneten Produkten (41), die angrenzend an den Träger (13) angeordnet ist und mit der Steuereinheit (20) elektrisch verbunden ist, und dazu konfiguriert ist, geeignete Produkte von dem Träger (13) in den Behälter (42) für geeignete Produkte abzuladen;
einen Behälter (44) für fehlerhafte Produkte, der angrenzend an den Träger (13) angeordnet ist; und
eine Komponente (43) zum Abladen von fehlerhaften Produkten, die angrenzend an den Träger (13) angeordnet ist und mit der Steuereinheit (20) elektrisch verbunden ist, und dazu konfiguriert ist, fehlerhafte Produkte von dem Träger (13) in den Behälter (44) für fehlerhafte Produkte abzuladen.

7. Bildgebungsinspektionsvorrichtung nach Anspruch 6, wobei
die Komponente (41) zum Abladen von geeigneten Produkten die geeigneten Produkte mit Druckluft anbläst; und
die Komponente (43) zum Abladen von fehlerhaften Produkten die fehlerhaften Produkte mit Druckluft anbläst.

## Revendications

1. Dispositif d'inspection d'imagerie comprenant :
- une plate-forme (10) présentant une base (11) ;
une unité d'entraînement (12) montée sur la base (11) ;
un porteur (13) monté sur l'unité d'entraînement (12) et entraîné par l'unité d'entraînement (12) pour tourner ;
et une section d'amenée (14), une section d'inspection (15), et une section de distribution (16) étant des zones définies au-dessus du porteur (13) et agencées circulairement et séquentiellement ;
- une unité de commande (20) reliée électriquement à l'unité d'entraînement (12) pour commander à l'unité d'entraînement (12) d'entraîner le porteur (13) ;
- de multiples unités de capture d'images (30) disposées autour du porteur (13), disposées adjacentes à la section d'inspection (15), et chacune parmi les unités de capture d'images (30) présentant
un support d'assemblage (31) ;
un ensemble de mise au point (32) monté sur le support d'assemblage (31) et relié électriquement à l'unité de commande (20) ; et
un objectif zoom (33) monté sur le support d'assemblage (31), relié à et entraîné par l'ensemble de mise au point (32) pour la mise au point et relié électriquement à l'unité de commande (20) pour la transmission d'informations numériques d'images capturées par l'objectif zoom (33) à l'unité de commande (20) ; et
- une unité de décharge (40) configurée pour déplacer des produits à inspecter à l'écart du porteur (13), disposée adjacente à la section de distribution (16) et reliée électriquement à l'unité de commande (20),
dans lequel
- le porteur (13) est constitué de matériaux transparents ;
- chacune parmi les unités de capture d'images (30) présente un élément d'éclairage supplémentaire (34) monté sur le support d'assemblage (31) et disposé devant l'objectif zoom (33) de l'unité de capture d'images (30) pour émettre une lumière vers l'objectif zoom (33) ; et
- la section d'inspection (15) est disposée entre l'élément d'éclairage supplémentaire (34) et l'objectif zoom (33) de chacune parmi les unités de capture d'images (30),
dans lequel
- l'ensemble de mise au point (32) de chacune parmi les unités de capture d'images (30) présente
un moteur d'entraînement (35) monté sur le support d'assemblage (31) de l'unité de capture d'images (30) ; un engrenage d'entraînement (36) monté sur le moteur d'entraînement (35) de l'unité de capture d'images (30) et entraîné par le moteur d'entraînement (35) ; et
un engrenage entraîné (37) monté sur l'objectif zoom (33) de l'unité de capture d'images (30), engagé avec l'engrenage d'entraînement (36), et entraîné par le moteur d'entraînement (35) pour tourner pour la mise au point.

2. Dispositif d'inspection d'imagerie selon la revendication 1, dans lequel
les multiples unités de capture d'images (30) comportent :
une unité de capture d'images latérale (30a) présentant un axe optique s'étendant radialement à travers un axe de rotation du porteur (13) ;
une unité de capture d'images inférieure (30b) disposée au-dessous du porteur (13) et présentant un axe optique s'étendant de bas en haut à travers deux faces plates du porteur (13) ;
une unité de capture d'images supérieure (30c) disposée au-dessus du porteur (13) et présentant un axe optique s'étendant de haut en bas à travers les deux faces plates du porteur (13) ; et
une unité de capture d'images pouvant osciller (30d) présentant un axe optique, et l'unité de capture d'images pouvant osciller (30d) étant disposée au-dessus du porteur (13) et étant capable d'osciller pour ajuster un angle défini entre l'axe de rotation du porteur (13) et
l'axe optique de l'unité de capture d'images pouvant osciller (30d).

3. Dispositif d'inspection d'imagerie selon la revendication 2, dans lequel
l'unité de capture d'images latérale (30a) présente une unité d'élévation (38) présentant
un moteur de rotation (381) relié électriquement à l'unité de commande (20) ;
un arbre à vis (382) relié au moteur de rotation (381) et entraîné par le moteur de rotation (381) pour tourner ; et
un écrou (383) vissé à l'arbre à vis (382), capable de se déplacer vers le haut et vers le bas le long de l'arbre à vis (382), et relié au support d'assemblage (31) de l'unité de capture d'images latérale (30a).

4. Dispositif d'inspection d'imagerie selon la revendication 2, dans lequel
l'unité de capture d'images pouvant osciller (30d) présente une unité d'oscillation (39) présentant un moteur de rétraction (391) relié électriquement à l'unité de commande (20) ;
un bras d'oscillation (394) présentant une rainure allongée (395), capable d'osciller, et relié au support d'assemblage (31) de l'unité de capture d'images pouvant osciller (30d) ;
un arbre de rétraction (392) relié au moteur de rétraction (391) et entraîné par le moteur de rétraction (391) pour s'étendre vers le porteur (13) ou à l'écart du porteur (13) ;
un coulisseau (393) relié à une extrémité terminale de l'arbre de rétraction (392), faisant saillie dans la rainure allongée (395), et se déplaçant solidairement avec l'arbre de rétraction (392) pour pousser le bras d'oscillation (394) à osciller vers le porteur (13) ou à l'écart de celui-ci.

5. Dispositif d'inspection d'imagerie selon l'une quelconque des revendications 1 à 4, dans lequel l'unité de commande (20) présente un affichage pour présenter les informations numériques des images capturées par l'objectif zoom (33) de chacune parmi les unités de capture d'images (30).

6. Dispositif d'inspection d'imagerie selon l'une quelconque des revendications 1 à 5, dans lequel l'unité de décharge (40) présente
une boîte de produits qualifiés (42) disposée adjacente au porteur (13) ;
un composant de décharge de produits qualifiés (41) disposé adjacent au porteur (13), relié électriquement à l'unité de commande (20), et configuré pour décharger des produits qualifiés du porteur (13) dans la boîte de produits qualifiés (42) ;
une boîte de produits défectueux (44) disposée adjacente au porteur (13) ; et
un composant de décharge de produits défectueux (43) disposé adjacent au porteur (13), relié électriquement à l'unité de commande (20), et configuré pour décharger des produits défectueux du porteur (13) dans la boîte de produits défectueux (44).

7. Dispositif d'inspection d'imagerie selon la revendication 6, dans lequel
le composant de décharge de produits qualifiés (41) souffle pneumatiquement les produits qualifiés ; et
le composant de décharge de produits défectueux (43) souffle pneumatiquement les produits défectueux.
